# EUROPEAN PATENT APPLICATION

(11) **EP 2 533 353 A1**
(43) Date of publication of application: **12.12.2012**
(21) Application number: 11739707.5
(22) Date of filing: 31.01.2011
(51) Int. Cl.: H01M 14/00, H01L 31/04

(54) **SOLAR CELL AND SOLAR CELL MODULE**

(30) Priority: 02.02.2010 JP 2010021300
(71) Applicant: Sharp Kabushiki Kaisha, Osaka-shi, Osaka 545-8522 (JP)
(72) Inventor: MIURA, Yoshiyuki, Osaka 545-8522 (JP); KOMIYA, Ryoichi, Osaka 545-8522 (JP); FUKUI, Atsushi, Osaka 545-8522 (JP); YAMANAKA, Ryohsuke, Osaka 545-8522 (JP)
(74) Representative: Müller - Hoffmann & Partner
(86) International application number: PCT/JP2011/051913
(87) International publication number: WO 2011/096359

(57) **Abstract**

A solar cell (51) includes a light transmissive substrate (1), a supporting substrate (2), a photoelectric conversion part (5) and a counter electrode (6) disposed between the light transmissive substrate and the supporting substrate in such a manner that they are spaced from each other; an electrolyte part (7) disposed between the light transmissive substrate (1) and the supporting substrate (2) while being in contact with the photoelectric conversion part (5) and the counter electrode (6), and a sealing part (4) that surrounds and seals the electrolyte part (7) in such a manner that the electrolyte part (7) is retained within an electrolyte disposition region that is definable by a long axis and a short axis. First openings (8a, 8b) that make the electrolyte part (7) communicate with the outside are provided at least in one end part in the direction of the long axis in the electrolyte disposition region, and at least one second opening (9) that makes the electrolyte part (7) communicate with the outside is provided in the middle part in the direction of the long axis in the electrolyte disposition region. The first and second openings (8a, 8b, 9) are sealed.

## Description

### TECHNICAL FIELD

The present invention relates to a solar cell and a solar cell module.

### BACKGROUND ART

As energy sources that are alternative to fossil fuels, batteries capable of converting sunlight into electric power, namely solar cells are focused on. At present, a solar cell using a crystalline silicon substrate and a thin-film silicon solar cell are partly coming into practical use. However, the former faces the problem of high production cost of the silicon substrate, and the latter faces the problem of rise in the production cost because it is required to use many kinds of gases for semiconductor production and a complicated apparatus. Therefore, in any solar cells, efforts for improving the efficiency of photoelectric conversion for reducing the cost per electric generation output are continued, however, the problems as described above have not been solved.

As a new type of solar cell, a wet solar cell applying photo-induced electron transfer of a metal complex and a wet solar cell using a quantum dot are proposed. The former is disclosed in Japanese Patent Laying-Open No. 1-220380 (PTL 1) and the latter is disclosed in Japanese Patent Laying-Open No. 2008-287900 (PTL 2).

In these wet solar cells, an electrode is formed on a surface of each of two glass substrates, and the two glass substrates are disposed so that these electrodes are inside, and a photoelectric conversion layer is disposed in such a manner that it is sandwiched between the electrodes. The photoelectric conversion layer is made up of a photoelectric conversion material having an absorption spectrum in the visible light region by adsorption of a photosensitizing pigment, and an electrolytic material. Such a wet solar cell is also called a "pigment-sensitized solar cell".

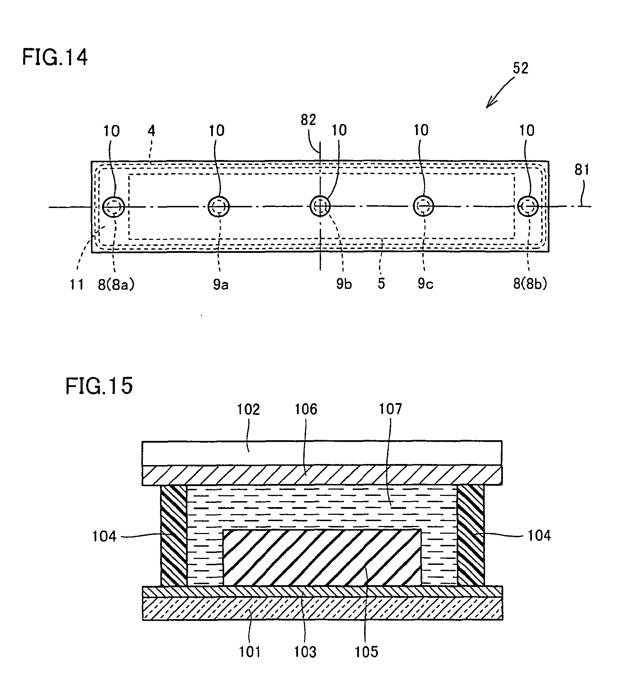

Concretely, as shown in Fig. 15, by injecting an electrolyte solution between two glass substrates, a pigment-sensitized solar battery cell is fabricated. In Fig. 15, a first support 101 and a second support 102 are pasted together by a sealing material 104. Each of first support 101 and second support 102 is a glass substrate. On the surface of first support 101, a counter conductive layer 106 is formed, and on the surface of second support 102, a conductive layer 103 is formed. In a part interior to sealing material 104 on the surface of first support 101, a photoelectric conversion layer 105 is disposed. The part other than photoelectric conversion layer 105 interior to sealing material 104 is filled with an electrolyte solution 107.

When a wet solar battery cell having such a configuration is irradiated with light, an electron is generated in photoelectric conversion layer 105, and the generated electron migrates to counter conductive layer 106 through an external electric circuit, and the migrated electron is conveyed to the counter electrode by ions in electrolyte solution 107 and then return to the photoelectric conversion layer. By such a sequence of electron flow, electric energy is taken out.

However, the basic structure of the pigment-sensitized solar cell described in PTL 1 is a cell form where an electrolyte solution is injected between two opposite glass substrates having transparent conductive films, and it is difficult to be applied to a solar cell having such a large area as 1 m square, although trial manufacture of a solar cell having a small area is possible. When an area of each solar battery cell is increased, the generated current increases in proportion to the area, however, the resistance component in the in-plane direction of the transparent conductive film used in the electrode part extremely increases, and in its turn, internal series resistance as the solar cell increases. As a result, a problem arises that FF (fill factor) in the current voltage characteristics at the time of photoelectric conversion decreases, and the photoelectric conversion efficiency deteriorates.

For solving the problem concerning the internal series resistance, there is proposed an approach of configuring a pigment-sensitized solar cell module by fabricating a plurality of elongated strip-like pigment-sensitized solar battery cells and arranging these in a stripe form and connecting these in series.

As a form of the pigment-sensitized solar cell module, several types are conceivable. For example, Japanese Patent Laying-Open No. 2006-244954 (PTL 3) describes a so-called Z type pigment-sensitized solar cell module, and Japanese Patent Laying-Open No. 2005-235725 (PTL 4) describes a so-called W type pigment-sensitized solar cell module. Also for the purpose of achieving lower cost and light weight, there is proposed a pigment-sensitized solar cell module where a plurality of pigment-sensitized solar battery cells are arranged so that they are connected in series on one glass substrate having a transparent conductive film. This is described, for example, in a pamphlet of International Publication No. WO97/16838 (PTL 5).

In conventional techniques, as described in Japanese Patent Laying-Open No. 2007-59181 (PTL 6), for example, an electrolyte solution is injected from an end part of a cell. However, when a pigment-sensitized solar cell module where a plurality of elongated strip-like pigment-sensitized solar battery cells are arranged in a stripe form and connected in series as described in PTL 2 or PTL 3 is fabricated, this method for injecting an electrolyte solution has such a big problem as will be mentioned below.

In a currently employed cell structure where a plurality of elongated strip-like pigment-sensitized solar battery cells are arranged in a stripe form and connected in series, increase in length of the strip-like cell is inevitable when an area of the solar battery cell is increased. Therefore, in the case of injection of an electrolyte solution from an end part, a substantial time is required, and operation efficiency of cell fabrication deteriorates. Further, in the case of injection of an electrolyte solution from an end part, injection of the electrolyte solution into the middle of the cell is insufficient, which may lead to deterioration in conversion efficiency.

### CITATION LIST

### PATENT LITERATURE

PTL 1: Japanese Patent Laying-Open No. 1-220380
PTL 2: Japanese Patent Laying-Open No. 2008-287900
PTL 3: Japanese Patent Laying-Open No. 2006-244954
PTL 4: Japanese Patent Laying-Open No. 2005-235725
PTL 5: pamphlet of International Publication No. WO97/16838
PTL 6: Japanese Patent Laying-Open No. 2007-59181

### SUMMARY OF INVENTION

### TECHNICAL PROBLEM

Currently, when a solar cell using an electrolyte solution such as a pigment-sensitized solar cell is fabricated, the production method includes the step of injecting the electrolyte solution into the solar cell. In this step, after making inside the cell into a vacuum state by reducing the pressure, the electrolyte solution is injected. In this step, the performance of the solar cell which is a final product differs depending on whether the inside of the cell is sufficiently filled with the electrolyte solution. For improving the injection rate of the electrolyte solution, it is important to sufficiently reduce the internal pressure of the cell. Here, according to the conventional technique described in PTL 6, when an electrolyte solution is injected inside the cell, an opening is provided in an end part of a porous photoelectric conversion layer, and after reducing the internal pressure of the cell through the opening, the electrolyte solution is injected through the opening. In this method, when an area of the overall cell is increased, in particular, permeation of the electrolyte solution all over the solar cell is difficult, and the problem of long time consumed, and the problem of deterioration in photoelectric conversion efficiency due to insufficient injection of the electrolyte solution arise.

It is an object of the present invention to provide a solar cell and a solar cell module capable of efficiently reducing the internal pressure of the cell, and reducing the time required for injecting an electrolyte solution all over the cell.

### SOLUTION TO PROBLEM

In order to achieve the above-described object, the wet solar cell according to the present invention includes a light transmissive substrate, a supporting substrate disposed parallel with the light transmissive substrate, a photoelectric conversion part and a counter electrode disposed between the light transmissive substrate and the supporting substrate in such a manner that they are spaced from each other, an electrolyte part disposed between the light transmissive substrate and the supporting substrate while being in contact with the photoelectric conversion part and the counter electrode, and a sealing part that surrounds and seals the electrolyte part in such a manner that the electrolyte part is retained within an electrolyte disposition region that is a region definable by a long axis and a short axis that is perpendicular to the long axis. In the solar cell according to the present invention, in at least one end part in the direction of the long axis of the electrolyte disposition region, a first opening that makes the electrolyte part communicate with the outside is provided, in a middle part in the direction of the long axis of the electrolyte disposition region, at least one second opening that makes the electrolyte part communicate with the outside is provided, and the first and second openings are sealed.

### ADVANTAGEOUS EFFECTS OF INVENTION

According to the present invention, since it becomes possible to reduce the internal pressure of the solar battery cell thorough the second opening provided in addition to the first opening, the pressure can be reduced efficiently. Further, since it becomes possible to inject an electrolyte solution all over the solar battery cell through the second opening provided in addition to the first opening, sufficient electrolyte solution permeation all over the solar cell is facilitated, and the time required for injecting the electrolyte solution can be reduced.

### BRIEF DESCRIPTION OF DRAWINGS

Fig. 1 is a section view of a solar cell in a first embodiment according to the present invention.
Fig. 2 is a plan view of a solar cell in the first embodiment according to the present invention.
Fig. 3 is a plan view of an electrolyte disposition region of a solar cell in the first embodiment according to the present invention.
Fig. 4 is a first modified example of a solar cell in the first embodiment according to the present invention.
Fig. 5 is a second modified example of a solar cell in the first embodiment according to the present invention.
Fig. 6 is a third modified example of a solar cell in the first embodiment according to the present invention.
Fig. 7 is a fourth modified example of a solar cell in the first embodiment according to the present invention.
Fig. 8 is a fifth modified example of a solar cell in the first embodiment according to the present invention.
Fig. 9 is a sixth modified example of a solar cell in the first embodiment according to the present invention.
Fig. 10 is a plan view of a solar cell module in a second embodiment according to the present invention.
Fig. 11 is a section view of a solar cell module in the second embodiment according to the present invention.
Fig. 12 is a section view of a first modified example of a solar cell module in the second embodiment according to the present invention.
Fig. 13 is a section view of a second modified example of a solar cell module in the second embodiment according to the present invention.
Fig. 14 is a plan view showing a positional relationship of second openings provided at three positions in Examples 6 to 12.
Fig. 15 is a section view of a solar cell according to a conventional technique.

### DESCRIPTION OF EMBODIMENTS

Generally, for injecting an electrolyte solution into a cell of a solar cell, an opening is formed in an end part of a region to be filled with the electrolyte solution, and through the opening, pressure in the region to be filled with the electrolyte solution is reduced. After reducing the pressure, the electrolyte solution is injected through the same opening. Such a method for injecting the electrolyte solution is employed in order to make the electrolyte solution securely enter inside micropores of a porous photoelectric conversion layer, a porous insulating layer or the like. For achieving this, it is necessary to inject the electrolyte solution after removing air inside the layer formed of a porous material to give a vacuum state. However, in the conventional technique, the opening is provided only in an end part of a region to be filled with the electrolyte solution. In such a case, for a solar battery cell with an increased area, in particular, it is difficult to reduce the internal pressure of the region to be filled with the electrolyte solution, and to make the electrolyte solution permeate all over the solar battery cell, and time is consumed. Further, injection of the electrolyte solution is insufficient in comparison with the capacity of the region to be filled with the electrolyte solution, and as a result, air bubbles are formed inside the solar battery cell, which can deteriorate the photoelectric conversion efficiency. For solving these problems, inventors of the present invention made diligent efforts, and finally accomplished the present invention.

In the following, as a representative example of a solar cell requiring injection of an electrolyte solution, a pigment-sensitized solar cell will be described, however, an object to which the present invention is applied is not limited to this. The present invention is an invention that is applicable to overall wet solar cells using an electrolyte solution such as a pigment-sensitized solar cell and a quantum dot solar cell.

### (First embodiment)

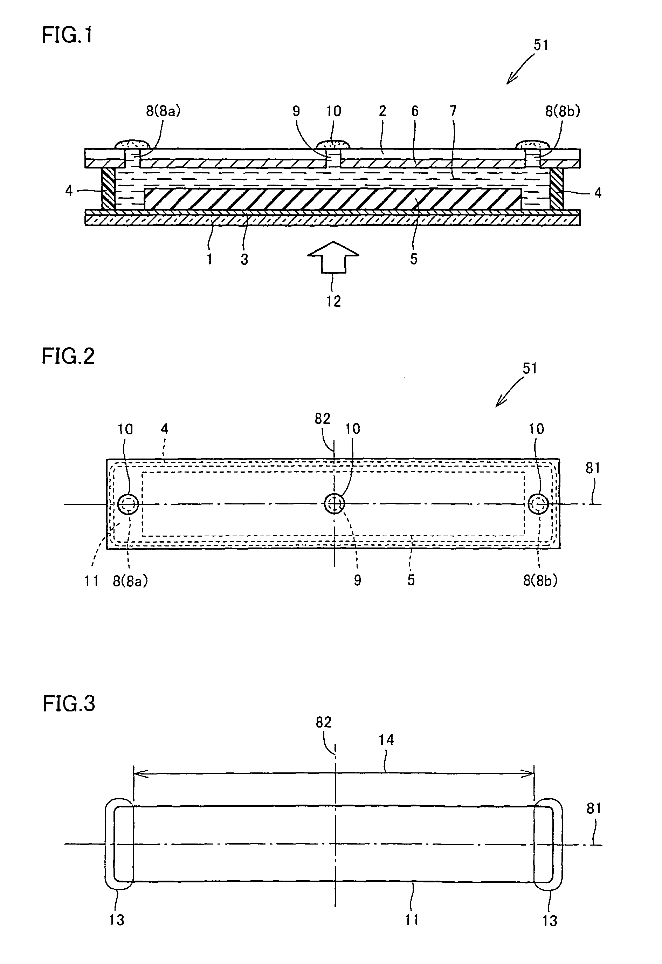

Referring to Fig. 1 and Fig. 2, a solar cell in a first embodiment according to the present invention will be described. A section view of the solar cell in the present embodiment is shown in Fig. 1, and a plan view of the solar cell is shown in Fig. 2, A solar cell 51 is a wet solar cell. Solar cell 51 includes a light transmissive substrate 1, a supporting substrate 2 disposed parallel with light transmissive substrate 1, a photoelectric conversion part 5 and a counter electrode 6 that are disposed between light transmissive substrate 1 and supporting substrate 2 in such a manner that they are spaced from each other, an electrolyte part 7 disposed between light transmissive substrate 1 and supporting substrate 2 while being in contact with photoelectric conversion part 5 and counter electrode 6, and a sealing part 4 that surrounds and seals electrolyte part 7 in such a manner that electrolyte part 7 is retained within an electrolyte disposition region 11 that is a region definable by a long axis 81 and a short axis 82 that is perpendicular to long axis 81. In at least one end part in the direction of long axis 81 of electrolyte disposition region 11, a first opening 8 that makes electrolyte part 7 communicate with the outside is provided. In a middle part in the direction of long axis 81 of electrolyte disposition region 11, at least one second opening 9 that makes electrolyte part 7 communicate with the outside is provided. First and second openings 8 and 9 are sealed. Counter electrode 6 has conductivity.

Solar cell 51 is a pigment-sensitized solar cell. Photoelectric conversion part 5 is a porous photoelectric conversion layer having a pigment adsorbed thereto. As shown in Fig. 1, on the surface on the side opposite to supporting substrate 2 of light transmissive substrate 1, a transparent conductive film 3 is formed, and photoelectric conversion part 5 is disposed to be electrically connected with transparent conductive film 3. In Fig. 2, electrolyte disposition region 11 is a region surrounded by sealing part 4. In the present embodiment, first and second openings 8 and 9 are sealed by adhesion of an opening sealing material 10, however, sealing may be achieved by another method. First opening 8 may be provided in at least one end part in the direction of long axis 81 of electrolyte disposition region 11, however, it is preferably provided at both ends as shown in the present embodiment. First openings 8 provided at both ends are called first openings 8a and 8b for distinction from each other.

A light receiving plane of solar cell 51 in the present embodiment is a lower face in Fig. 1, namely the lower face of light transmissive substrate 1. Therefore, light 12 enters as shown in Fig. 1, and penetrates light transmissive substrate 1 and transparent conductive film 3, and reaches photoelectric conversion part 5. As a result, electric power is generated.

For producing solar cell 51, it is necessary to inject an electrolyte solution inside a solar battery cell for forming electrolyte part 7, however, in the present embodiment, second opening 9 is formed in addition to first opening 8, so that it is possible to facilitate injection of an electrolyte solution in comparison with a conventional technique.

The solar cell in the present embodiment is convenient in that a larger number of openings that can be used in a pressure reducing step and an injecting step of the electrolyte solution are provided in comparison with a solar cell based on a conventional technique when an electrolyte solution is injected on the site of production thereof. In other words, since it becomes possible to reduce the internal pressure of the solar battery cell through a larger number of openings thus provided, it is possible to reduce the pressure more efficiently. Further, since it becomes possible to inject the electrolyte solution all over the solar cell through a larger number of openings thus provided, the electrolyte solution permeates more easily all over the solar battery cell, and the time required for injection of the electrolyte solution can be reduced. By configuring the solar cell in this manner, it becomes possible to sufficiently fill inside the solar battery cell with the electrolyte solution by an operation of short time. As a result, it is possible to prevent occurrence of such a situation that filling is insufficient, and hence to suppress deterioration in photoelectric conversion efficiency.

Preferably, the opening is provided not only near an end part of electrolyte disposition region 11 but also in the middle part of electrolyte disposition region 11 because injection of the electrolyte solution is facilitated, and the time for injecting the electrolyte solution can be shortened. Preferably, it is provided, in particular, near the center in the middle part. Provision of an opening in the middle part in such a manner is preferred because the solar battery cell can be filled with the electrolyte solution without shortage, and deterioration in photoelectric conversion efficiency can be suppressed.

In the present embodiment, second opening 9 is provided in supporting substrate 2, however, for achieving the operation and effect of the present invention, the position where second opening 9 is provided may be on the side of light transmissive substrate 1 without limited to the side of supporting substrate 2. Second opening 9 may be provided on the lateral face by some means. However, as shown in the present embodiment, the second opening is preferably provided in supporting substrate 2. This is because it is possible to reduce the degree of interrupting incidence of light with such a configuration.

The same applies also to first openings 8a and 8b. In other words, they are preferably provided on the side of supporting substrate 2, although they may be provided on the side of light transmissive substrate 1.

The definition of "middle part" of electrolyte disposition region 11 will be described. Electrolyte disposition region 11 has a longitudinal planar shape as shown in Fig. 3. Electrolyte disposition region 11 may be rectangular or may be a rectangle with slightly rounded corners. The parts near both ends in this longitudinal direction are end parts 13. The region sandwiched between two end parts 13 is a middle part 14. In other words, the part other than the end parts 13 is middle part 14.

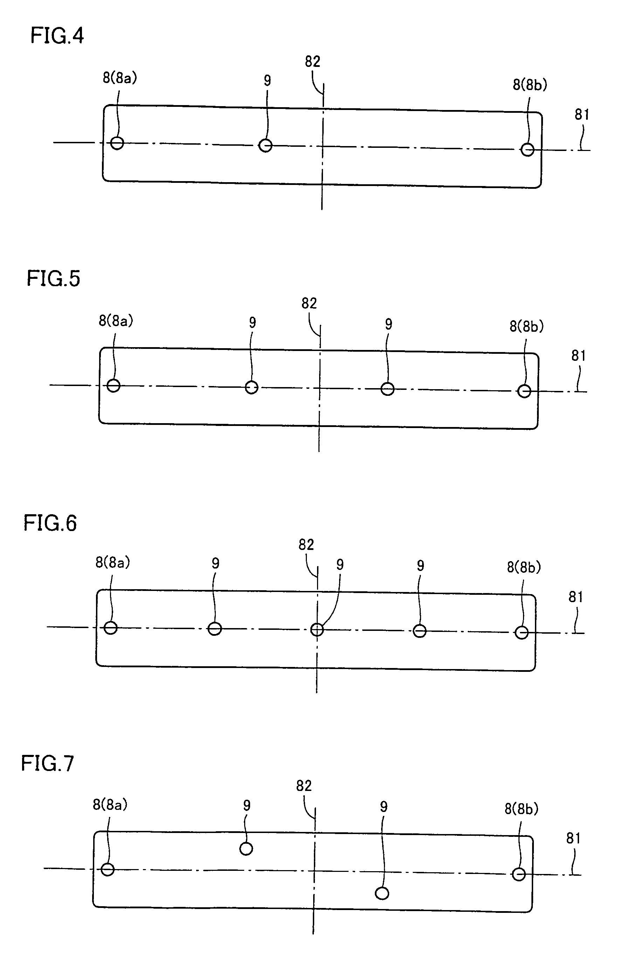

In the present embodiment, second opening 9 is provided at the center, however, it may be provided at any position within the range of middle part 14 without limited to the center. Therefore, such an arrangement as shown in Fig. 4 may be adopted.

In the present embodiment, second opening 9 is provided only at one position, however, second opening 9 may be provided at plural positions in middle part 14. Therefore, the arrangements as shown in Fig. 5 and Fig. 6, for example, may be adopted.

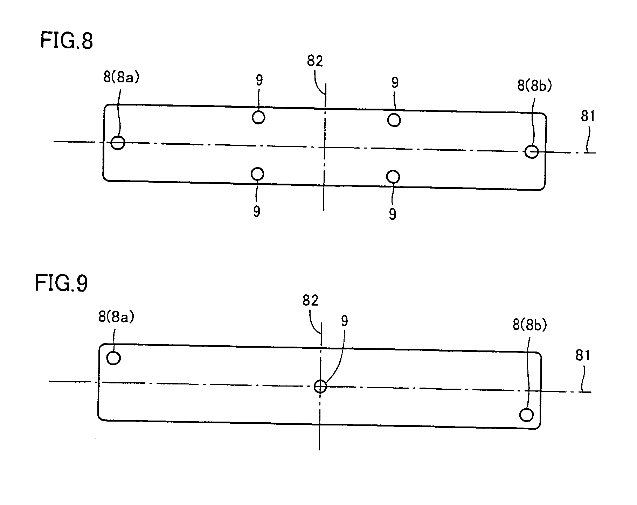

In the present embodiment, second opening 9 is arranged to overlap with long axis 81, however, it may be arranged not to overlap with long axis 81. Therefore, the arrangements as shown in Fig. 7 and Fig. 8, for example, may be adopted.

When there are plural second openings 9, they do not have to be necessarily arranged on the same straight line. However, when there are plural second openings 9, they are preferably arranged at regular intervals so that they overlap with long axis 81. This is because by arranging in such a manner, pressure reduction inside the cell and injection of an electrolyte solution inside the cell can be conducted efficiently.

Also as for first opening 8, although the case where it is arranged at the center of the short side in the end part of electrolyte disposition region 11 is exemplified, in the present embodiment, it does not have to be necessarily arranged at the center of the short side as far as it is arranged in the end part of electrolyte disposition region 11. Therefore, the arrangement as shown in Fig. 9, for example, may be adopted.

In the following, each constituent of the solar cell in the present embodiment will be specifically described.

### (Light transmissive substrate and supporting substrate)

As a material of light transmissive substrate 1 constituting the light receiving plane of the solar cell, for example, a glass substrate of soda glass, fused quartz glass, crystalline quartz glass or the like, or a heat-resistant resin plate such as a flexible film can be adopted. Also, as light transmissive substrate 1, the one having a thickness of 0.2 to 5 mm and resistance to heat of 250°C or higher is preferred.

As a material forming the "flexible film" used herein, for example, tetraacetyl cellulose (TAC), polyethylene terephthalate (PET), polyphenylene sulfide (PPS), polycarbonate (PC), polyarylate (PA), polyether imide (PEI), phenoxy resin, Teflon (registered trademark) and so on are recited.

When another layer is formed on supporting substrate 2 with heating, for example, when a conductive layer is formed on supporting substrate 2 with heating at about 250°C, Teflon (registered trademark) having resistance to heat of 250°C or higher is particularly preferred among the materials of flexible film recited above.

### (Transparent conductive film and conductive layer in counter electrode)

As a material of transparent conductive film 3 on the side of light receiving plane, those substantially transmitting light of a wavelength having an effective sensitivity at least to a sensitizing pigment as will be described later may be adopted, and they do not have to necessarily have transmissivity to light of every wavelength region. As a material of transparent conductive film 3, for example, transparent conductive metal oxides such as ITO (indium-tin composite oxide), tin oxide doped with fluorine, zinc oxide doped with boron, gallium or aluminum, and titanium oxide doped with niobium are recited. Alternatively, transparent conductive film 3 may be imparted with light transmissivity by thinning opaque materials such as gold, silver, aluminum, indium, platinum, and carbon (carbon black, graphite, glass carbon, amorphous carbon, hard carbon, soft carbon, carbon whisker, carbon nanotube, fullerene). However, when a metal material is used in transparent conductive film 3, transparent conductive film 3 may be coated with a corrosion resistant material in the part where it is in contact with the electrolyte solution for preventing corrosion because some of such metal materials are corroded by the electrolyte solution.

As a material of counter electrode 6 on the side opposite to the light receiving plane, those within the same range as described above as a material for transparent conductive film 3 may be used. Light transmissivity is not required for counter electrode 6. Therefore, even if the material is opaque, the material may be used in its thick form without necessity of thinning to such a degree that light transmissivity arises.

When iodine is contained in electrolyte part 7 of solar cell 51, transparent conductive film 3 and counter electrode 6 are preferably formed of a material having iodine resistance.

Transparent conductive film 3 and counter electrode 6 may be formed by known techniques such as a PVD method, a vapor deposition method, a sputtering method, and an application method.

### (Counter electrode)

In the present embodiment, the one combining a catalyst layer and a conductive layer having a function of a collective electrode is called a "counter electrode". The catalyst layer used herein has a catalytic activity, and has a function of activating an oxidation-reduction reaction of the electrolyte part as will be described later. When the catalyst layer has high conductivity, or when the conductive layer has a catalytic activity, each of these can serve as a counter electrode alone.

As the catalyst layer, those activating an oxidation-reduction reaction of the electrolyte part as will be described later may be adopted, and for example, platinum, platinum chloride, and carbon (carbon black, graphite, glass carbon, amorphous carbon, hard carbon, soft carbon, carbon whisker, carbon nanotube, fullerene) can be adopted.

In the present embodiment, the light receiving side is configured by light transmissive substrate 1, and light transmissive substrate 1 is provided with photoelectric conversion part 5, and the non-light receiving side is configured by supporting substrate 2, and supporting substrate 2 is provided with counter electrode 6 functioning also as a catalyst layer, and these are opposed to each other with electrolyte part 7 intervened therebetween, however, as another example of configuration, light transmissive substrate 1 on the light receiving side may be provided with both the photoelectric conversion part and the catalyst layer. Since the catalyst layer of this case requires light transmissivity as is the case with transparent conductive film 3 described above, thinning is required. Although a preferred film thickness differs depending on the material of the catalyst layer, the thickness is preferably 0.5 to 300 nm, and more preferably 1 to 30 nm when platinum is used, for example. The catalyst layer may be formed by known techniques such as a PVD method, a vapor deposition method, a sputtering method, and an application method.

### (Porous photoelectric conversion part)

As described above, photoelectric conversion part 5 is formed of a porous material to which a pigment is adsorbed. Photoelectric conversion part 5 may be a porous semiconductor layer.

The porous semiconductor layer is formed of a semiconductor, and as its form, various forms such as a particulate form, and a film form having a number of micropores may be used, and among these, a film form is preferred.

As a semiconductor material forming the porous semiconductor layer, those generally used as a photoelectric conversion material may be used without any particular limitation. As such a material, for example, compounds such as titanium oxide, zinc oxide, tin oxide, iron oxide, niobium oxide, cerium oxide, tungsten oxide, nickel oxide, strontium titanate, cadmium sulfide, lead sulfide, zinc sulfide, indium phosphide, copper-indium sulfide (CuInS₂), CuAlO₂, and SrCu₂O₂ and combinations thereof are recited. Among these, titanium oxide, zinc oxide, tin oxide, and niobium oxide are preferred. From the view point of photoelectric conversion efficiency, stability and safety, titanium oxide is particularly preferred. Photoelectric conversion part 5 may be formed of a mixture of two or more kinds from these semiconductor materials.

In the present invention, the titanium oxide embraces various titanium oxides in a narrow sense such as anatase type titanium oxide, rutile type titanium oxide, amorphous titanium oxide, meta-titanic acid, and ortho-titanic acid, titanium hydroxide, and hydrous titanium oxide, and these may be used alone or as a mixture. Regarding two kinds of crystal systems, the anatase type and the rutile type, both forms can be taken depending on the production method of titanium oxide and heat history, however, the anatase type is general.

The above-described semiconductor material forming the porous semiconductor layer is preferably a polycrystalline sintered body made of microparticles from the view point of stability, easiness of crystal growth, production cost and so on. An average particle size of "microparticles" used herein is preferably not less than 5 nm and less than 50 nm (preferably not less than 10 nm and not more than 30 nm), from the view point of obtaining a sufficiently large effective surface area with respect to a projection area for converting incident light into electric energy with high yield.

Light scatterability of the porous semiconductor layer can be adjusted by the particle size (average particle size) of a semiconductor material used in formation of the layer. Although it depends on the forming condition of the porous semiconductor layer, concretely, the porous semiconductor layer formed of semiconductor particles having a large average particle size has high light scatterability, so that the light capture rate can be improved by scattering the incident light. The porous semiconductor layer formed of semiconductor particles having a small average particle size has low light scatterability, and an adsorption amount can be increased by providing more adsorption points of a pigment.

Therefore, in the present invention, on the above-described polycrystalline sintered body formed of microparticles, a layer of semiconductor particles having an average particle size of not less than 50 nm, preferably not less than 50 nm and not more than 600 nm may be provided.

The porous semiconductor layer may have a laminate structure made up of three or more layers each having different light scatterability for improving the light capture rate efficiently. In this case, a plurality of porous semiconductor layers may be formed by using plural kinds of particle sizes so that light is scattered and reflected light in correspondence with absorption ranges of pigments as will be described later.

An average particle size of the semiconductor material is not particularly limited as far as it is within the above-described range in which the effect of the present invention can be exerted, however, from the view point of effectively using incident light for photoelectric conversion, those having somewhat uniform average particle sizes as is the commercially available semiconductor material powder are preferred.

Mechanical strength of the porous semiconductor layer having high light scatterability is low because the average particle size of the semiconductor material forming the same is large. In particular, when such a porous semiconductor layer is disposed as photoelectric conversion part 5 at the position where it is likely to come into contact with counter electrode 6, there may be a problem that strength of the structure of the solar cell is insufficient. In such a case, the porous semiconductor layer may be mechanically strengthened by blending a semiconductor material having a small average particle size into a semiconductor material having a large average particle size in a proportion of, for example, not more than 10% by weight.

A method for forming a film-like porous semiconductor layer on the conductive layer is not particularly limited, and several known methods are recited. Concretely, (1) a method of applying a paste containing semiconductor particles to the conductive layer by a screen printing method, an inkjet method and so on, and then burning the same, (2) a method of forming a film on the conductive layer by a CVD (Chemical Vapor Deposition) method or a MOCVD (Metal Organic Chemical Vapor Deposition) method using a desired source gas, (3) a method of forming a film on the conductive layer by a PVD (Physical Vapor Deposition) method, a vapor deposition method, a sputtering method or the like using a source solid, and (4) a method of forming a film on the conductive layer by a sol-gel method, a method utilizing an electrochemical oxidation-reduction reaction or the like can be recited.

Among these methods, a screen printing method using a paste is particularly preferred from the view point of capability of forming a porous semiconductor layer of a thick film at a low cost.

The film thickness of the porous semiconductor layer is not particularly limited, however, it is preferably about 0.5 to 50 µm from the view point of photoelectric conversion efficiency.

In particular, when a layer formed of semiconductor particles having high light scatterability and an average particle size of not less than 50 nm is provided, the film thickness of the layer is preferably 0.1 to 40 µm, and more preferably 5 to 20 µm. The film thickness of the layer formed of particles having an average particle size of not less than 5 nm and less than 50 nm is preferably 0.1 to 50 µm, and more preferably 10 to 40 µm.

For improving the photoelectric conversion efficiency of the solar cell, it is necessary to form the photoelectric conversion layer while making the pigment as will be described later be adsorbed to the porous semiconductor layer in a larger amount. For achieving this, in the film-like porous semiconductor layer, those having a large specific surface area are preferred. The specific surface area of the porous semiconductor layer is preferably about 10 to 200 m²/g.

A method for forming a porous semiconductor layer using titanium oxide as semiconductor particles will be concretely described.

First, 125 mL of titanium isopropoxide (product of Kishida Chemical Co., Ltd.) is added dropwise to 750 mL of a 0.1 M aqueous nitric acid solution (product of Kishida Chemical Co., Ltd.) to cause hydrolysis, and heated at 80°C for 8 hours to prepare a sol liquid. Then the sol liquid is heated at 230°C for 11 hours in a titanium autoclave to allow growth of titanium oxide particles, and ultrasonically dispersed for 30 minutes, to prepare a colloidal solution containing titanium oxide particles having an average particle size (average primary particle size) of 15 nm. Then, the resultant colloidal solution is added with a double volume of ethanol, and centrifuged at a rotation speed of 5000 rpm, to obtain titanium oxide particles.

The average particle size in this description is a value determined from a diffraction peak of XRD (X-ray diffraction). Concretely, from a half-width of diffraction angle in θ/2θ measurement of XRD, and a Scherrer's equation, an average particle size is determined. For example, in the case of the anatase type titanium oxide, a half-width of diffraction peak (near 2θ = 25.3°) corresponding to (101) face may be measured.

Next, after washing the obtained titanium oxide particles, ethyl cellulose and terpineol dissolved in anhydrous ethanol are added and stirred to disperse the titanium oxide particles. Thereafter, the mixture is heated in a vacuum condition to evaporate ethanol, and a titanium oxide paste is obtained. The concentration is adjusted so that the titanium oxide solid concentration is 20 wt%, ethyl cellulose is 10 wt%, and terpineol is 64 wt%, for example, as a final composition.

As a solvent used for preparing the paste containing (suspending) semiconductor particles, besides those described above, grime solvents such as ethylene glycol monomethyl ether, alcohol solvents such as isopropyl alcohol, mixed solvents such as isopropyl alcohol/toluene, water and so on are recited.

Next, the paste containing semiconductor particles is applied to the conductive layer by the method as described above, and burned, to obtain a porous semiconductor layer. In drying and burning, it is necessary to appropriately adjust the conditions such as temperature, time and atmosphere depending on the kinds of the support and semiconductor particles being used. Burning may be conducted in an air atmosphere or in an inert gas atmosphere at a temperature generally ranging from about 50 to 800°C for a time generally ranging from about 10 seconds to 12 hours. This drying and burning may be conducted once at an identical temperature, or may be conducted twice or more times at various temperatures.

### (Photosensitizing pigment)

As a pigment that is adsorbed to the porous semiconductor layer and functions as a photosensitizing agent, organic pigments, metal complex pigments and the like having absorption in various visible light regions and/or infrared light regions are recited, and from these pigments, one kind or two or more kinds can be selectively used.

As an organic pigment, for example, azo pigments, quinone pigments, quinone imine pigments, quinacridone pigments, squarylium pigments, cyanine pigments, merocyanine pigments, triphenylmethane pigments, xanthene pigments, porphyrin pigments, perylene pigments, indigo pigments, naphthalocyanine pigments and the like are recited. The extinction coefficient of an organic pigment is generally larger than that of a metal complex pigment assuming the form that a molecule is coordinate-bonded to a transition metal.

As a metal complex pigment, those having the form in which a molecule is coordinate-bonded to a metal such as Cu, Ni, Fe, Co, V, Sn, Si, Ti, Ge, Cr, Zn, Ru, Mg, Al, Pb, Mn, In, Mo, Y, Zr, Nb, Sb, La, W, Pt, Ta, Ir, Pd, Os, Ga, Tb, Eu, Rb, Bi, Se, As, Sc, Ag, Cd, Hf, Re, Au, Ac, Tc, Te or Rh are recited, and among these, phthalocyanine pigments and ruthenium pigments are preferred, and ruthenium metal complex pigments are particularly preferred.

In particular, the ruthenium metal complex pigments represented by the following chemical formulas (1) to (3) are preferred.

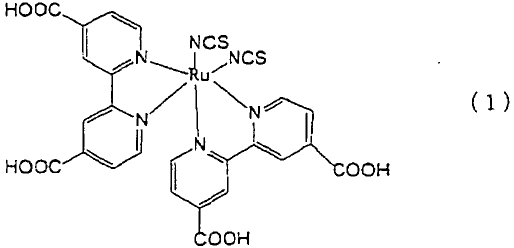

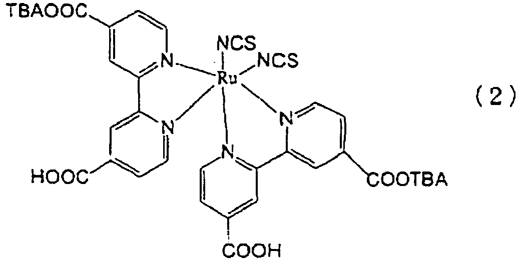

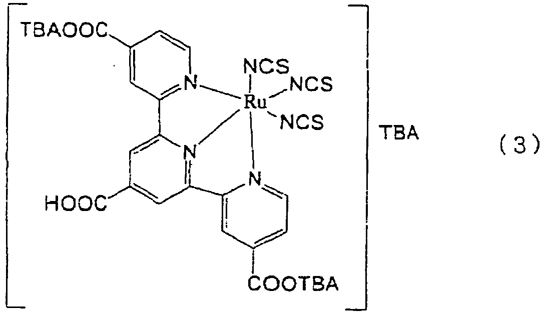

Further, for making a pigment to be rigidly adsorbed to the porous semiconductor layer, those having an interlock group such as a carboxylic group, a carboxylic anhydride group, an alkoxy group, a hydroxyl group, a hydroxyalkyl group, a sulfonic group, an ester group, a mercapto group or a phosphonyl group in the pigment molecule are preferred. Among these, a carboxylic group and a carboxylic anhydride group are particularly preferred. Here, the interlock group provides an electric bond for facilitating migration of electrons between the pigment in the excited state and the conduction band of the porous semiconductor layer.

As a method of making a pigment to be adsorbed to a porous semiconductor layer, for example, a method of dipping the porous semiconductor layer formed on a conductive layer in a solution dissolving the pigment (pigment adsorbing solution) is recited.

As a solvent for dissolving the pigment, any pigments that dissolve the pigment are usable, and concrete examples thereof include alcohols such as ethanol, ketones such as acetone, ethers such as diethyl ether and tetrahydrofuran, nitrogen compounds such as acetonitrile, halogenated aliphatic hydrocarbons such as chloroform, aliphatic hydrocarbons such as hexane, aromatic hydrocarbons such as benzene, esters such as ethyl acetate, and water. These solvents may be used in a mixture of two or more kinds.

While the pigment concentration in the solution may be appropriately adjusted according to the kinds of pigment and solvent being used, it is preferably as high as possible for improving the adsorbing function, and may be, for example, not less than 5 × 10⁴ mol/L.

### (Electrolyte part)

An "electrolyte part" is a part filled with an electrolyte that is charged between the porous photoelectric conversion part and the catalyst layer. The electrolyte is not necessarily a liquid at the time of completion of the solar cell, and may be a solid. Therefore, the electrolyte part is the part occupied by the electrolyte formed of a conductive material capable of transporting an electric charge. As the electrolyte, a liquid electrolyte or a solid electrolyte may be used.

As a liquid electrolyte, those in a liquid state containing a redox species may be used. Concretely, first, those composed of a redox species and a solvent capable of dissolving the same are recited. These are generally called "electrolyte solutions". Second, those composed of a redox species and a molten salt capable of dissolving the same are recited. Third, those composed of a redox species and a solvent and a molten salt capable of dissolving the same are recited. Those recited secondly and thirdly are called "molten salt electrolyte solutions". While three kinds of examples are recited here, those generally used in a battery, a solar cell or the like may be used without particular limitation.

Further, as a solid electrolyte, a conductive material capable of transporting an electric charge, usable as an electrolyte of a solar cell, and not having fluidity may be used. As a solid electrolyte, usually, the one from which fluidity of an electrolyte solution in a liquid state is removed can be conceived. For example, a polymer electrolyte obtained by solidifying a liquid electrolyte by a polymer compound is recited. In the case of a configuration where the electrolyte is solid at the time of completion of the solar cell, a desired electrolyte part can be obtained by injecting the electrolyte as an electrolyte solution in a liquid state into a desired region, and then removing the fluidity of the electrolyte solution to solidify it.

### (Electrolyte liquid part)

In the present embodiment, since an electrolyte in a liquid state is used, the electrolyte part is an "electrolyte solution part". The electrolyte solution part is one form of the electrolyte part. An "electrolyte solution disposition region" is one form of the electrolyte disposition region. As a material which is an origin of a redox species in the electrolyte solution,
● combinations of a metal iodide such as LiI, NaI, KI, CsI or CaI₂ and I₂;
● combinations of an iodide like an iodide salt of a quaternary ammonium compound such as tetraalkyl ammonium iodide, pyridinium iodide or imidazolium iodide and I₂;
● combinations of a metal bromide such as LiBr, NaBr, KBr, CsBr or CaBr₂ and Br₂; and
● combinations of a bromide like a bromide salt of a quaternary ammonium compound such as tetraalkyl ammonium bromide or pyridinium bromide and Br₂ can be recited. The material which is an origin of the redox species may be used in a mixture of two or more kinds. Among these, a combination of LiI and I₂, or a combination of imidazolium iodide and I₂, or a combination of LiI and imidazolium iodide and I₂ is preferred.

As a solvent used in an electrolyte solution, carbonate compounds such as ethylene carbonate and propylene carbonate; heterocyclic compounds such as 3-methyl-2-oxazolidinone; ether compounds such as dioxane and diethylether; ethers such as ethylene glycol dialkyl ether, propylene glycol dialkyl ether, polyethylene glycol dialkyl ether, polypropylene glycol dialkyl ether, ethylene glycol monoalkyl ether, propylene glycol monoalkyl ether, polyethylene glycol monoalkkyl ether and polypropylene glycol monoalkyl ether; alcohols such as methanol and ethanol; polyalcohols such ethylene glycol, propylene glycol, polyethylene glycol, polypropylene glycol and glycerin; nitrile compounds such as acetonitrile, glutarodinitrile, methoxyacetonitrile, propionitrile and benzonitrile; aprotic polar substances such as dimethyl sulfoxide and sulfolane, and water are recited.

The above electrolyte may be added with an additive as is necessary. As such an additive, nitrogen-containing aromatic compounds such as t-butylpyridine (TBP) and methylbenzene imidazole (MBIm), and salts other than the foregoing redox species such as guanidine thiocyanate (Gu-SCN) are recited.

The electrolyte concentration in the electrolyte part is selected according to the kind of the electrolyte. The electrolyte concentration is preferably in the range of 0.01 to 2.0 mol/L.

### (Sealing part)

Sealing part 4 is formed from a sealing material. The sealing material is important for preventing volatilization of the electrolyte and entry of water or the like into the solar battery cell. Also, the sealing material is important for the purpose of (1) absorbing a falling object or stress (impact) acting on the support, (2) absorbing flexure acting on the support during long term use, and so on.

The material forming the sealing material is not particularly limited as far as it is a material generally usable in a solar cell, and capable of exerting the effect of the present invention. As such a material, for example, a silicone resin, an epoxy resin, a polyisobutylene resin, a hot melt resin, a glass frit and so on are preferred, and these may be used as a laminate of two or more layers of two or more kinds. When a nitrile-based solvent or a carbonate-based solvent is used as a solvent of a redox electrolyte, a silicone resin or a hot melt resin (for example, an ionomer resin), a polyisobutylene resin and a grass frit are particularly preferred.

A pattern of the sealing material may be formed by a dispenser when a silicone resin, an epoxy resin or a glass frit is used as the sealing material. When a hot melt resin is used as the sealing material, by punching patterned holes in a sheet-like hot melt resin, the pattern can be formed.

### (Second embodiment)

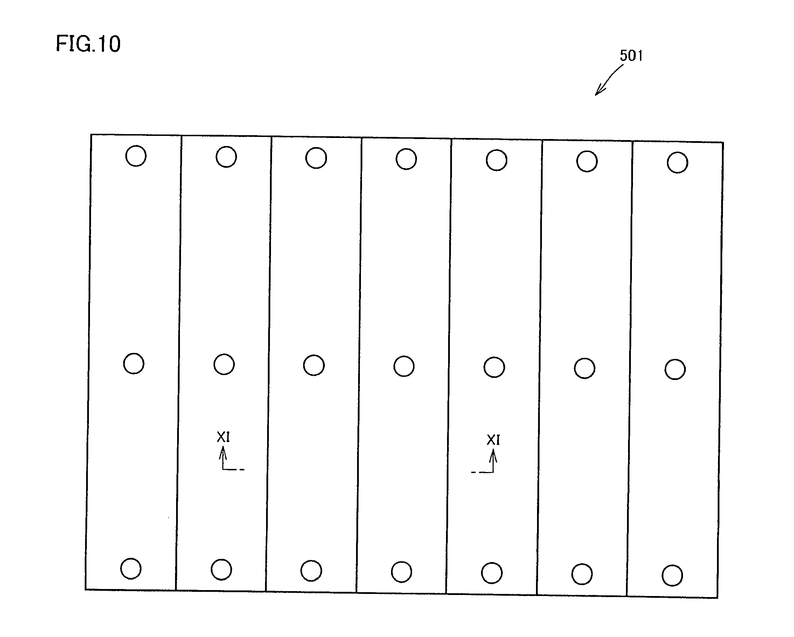

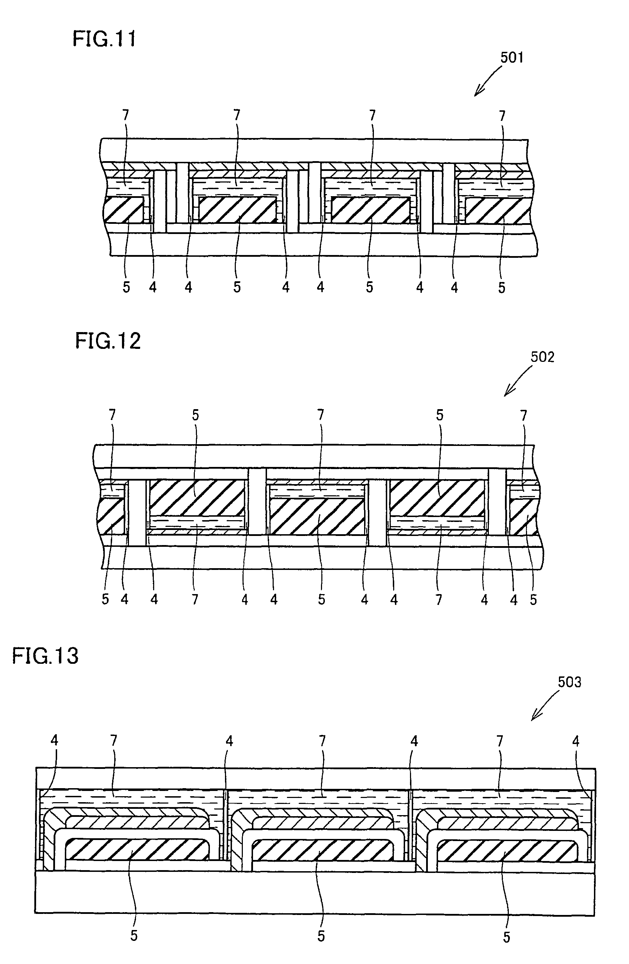

Referring to Fig. 10 and Fig. 11, a solar cell module in a second embodiment according to the present invention will be described. The solar cell module according to the present invention is a solar cell module including the configuration where a plurality of solar cells including at least one solar cell are connected as is mentioned above. That is, not all of the connected plural solar cells need to be the solar cell as described above, and it suffices that at least one of the solar cells is the solar cell as described above. All of the solar cells may be the solar cell as described above. The connected solar cells are electrically connected in series.

Fig. 10 schematically shows a solar cell module 501 in the present embodiment.

In configuring solar cell module 501, a plurality of strip-like solar cells 51 are assembled, and arranged in parallel so that the long sides of individual solar cells 51 mutually contact with each other and connected. Fig. 11 is a section view taken in the direction of the arrow regarding the line XI-XI in Fig. 10. In solar cell module 501, one end of the counter electrode extends outside the cell, and is electrically connected with the transparent conductive film extending from the neighboring solar battery cell.

According to the solar cell module in the present embodiment, since it becomes possible to reduce the internal pressure of the solar battery cell through the second opening provided in addition to the first opening in fabricating each solar battery cell, pressure reduction can be conducted efficiently. Further, since it becomes possible to inject the electrolyte solution all over the solar battery cell through the second opening provided in addition to the first opening, sufficient permeation of the electrolyte solution all over the solar battery cell is facilitated, and the time required for injection of the electrolyte solution can be reduced. Since the operation time can be reduced in each solar battery cell in this manner, it is possible to reduce the time required for fabrication of the overall solar cell module.

A first modified example of a configuration of the solar cell module is shown in Fig. 12. Fig. 12 schematically shows a solar cell module 502. In solar cell module 502, the neighboring solar cells are connected in such a manner that they are mutually inversed. In the solar cell module having this configuration, it is possible to utilize the light both from the front and back sides for generating power.

A second modified example of a configuration of the solar cell module is shown in Fig. 13. Fig. 13 schematically shows a solar cell module 503. In solar cell module 503, each solar cell is provided with both the photoelectric conversion part and the counter electrode on the substrate on the side of the light receiving plane.

More concrete examples of the solar cell described in the first embodiment will be described in the following.

### (Examples 1 to 5)

As a solar cell according to the present invention, a pigment-sensitized solar cell was fabricated. The production method will be concretely shown below. The pigment-sensitized solar cell has a structure shown in Fig. 1 and Fig. 2. However, the number of second openings 9 is not limited to that shown in Fig. 1 and Fig. 2. In examples, for the purpose of comparison, plural kinds of solar cells were fabricated while the arrangement density of second openings 9, namely the value ofN as will be described later was varied.

First, as a support formed with the conductive layer, two glass substrates with a SnO₂ film available from Nippon Sheet Glass Co., Ltd. were prepared. This is a glass substrate formed with a SnO₂ film which is a transparent conductive layer on one face. Of these two substrates, one is to serve as light transmissive substrate 1 and transparent conductive film 3 in Fig. 1, and the other is to serve as supporting substrate 2 and counter electrode 6. The combination of supporting substrate 2 and counter electrode 6 can be called a "counter electrode substrate".

In the substrate to serve as supporting substrate 2, as counter electrode 6, a film was formed in a thickness of about 7 nm by sputtering platinum to cover the surface of the SnO₂ film. The resultant counter electrode 6 functions also as a catalyst layer.

In this substrate, in the sites to serve as end parts of electrolyte disposition region 11 later, through-holes were formed by a known technique. These through-holes are to serve as first openings 8a and 8b later. Further, in the site to serve as a middle part of electrolyte disposition region 11 later, at least one through-hole was formed by a known technique. This through-hole is to serve as second opening 9 later. Here, arrangement of second opening 9 is represented on the assumption that the arrangement density in the direction along the long axis is N per 1 m long. The term "long axis" used herein is long axis 81 of electrolyte disposition region 11 that will be formed later.

Here, N = 3 means that second openings 9 are arranged at intervals of about 1/3 m, namely about 33 cm, and N = 4 means that second openings 9 are arranged at intervals of about 1/4 m, namely about 25 cm. N = 2 means that second openings 9 are arranged at intervals of about 1/2 m, namely about 50 cm. In the case where first openings 8a and 8b are provided near both ends of the substrate having a total length of 1 m, and only one second opening 9 is provided at the center of the longitudinal direction, there is only one second opening 9, however, second opening 9 is regarded as being arranged at intervals of about 50 cm in consideration of the distance to first openings 8a and 8b, and hence this case is handled by N = 2. When there is no second opening 9, the case corresponds to N = 0.

As examples, substrates were individually fabricated so that N = 2, 3, 5, 7 and 8, respectively.

Next, a titanium oxide paste (product of Solaronix, trade name D/SP) was applied to cover the SnO₂ film of the substrate that is to serve as light transmissive substrate 1 in such a shape that the shape after burning was 5 mm wide × 1000 mm long × 20 µm thick using a screen printing machine (LS-150 available from NEWLONG SEIMITSU KOGYO) and leveled at room temperature for 1 hour, and dried in an oven at 80°C for 30 minutes, and the obtained substrate was burned in air at 500°C. In this manner, porous photoelectric conversion part 5 was obtained on the substrate. Therefore, photoelectric conversion part 5 has an elongated rectangular shape.

Thereafter, a ruthenium pigment (product of Solaronix, trade name Ruthenium 620-1H3TBA) having the above chemical formula (3) was dissolved at a concentration of 4 × 10⁻⁴ mol/L in a mixed solvent of acetonitrile and t-butanol mixed in a volume ratio of 1 : 1, to prepare an adsorbing pigment solution, and by dipping photoelectric conversion part 5 in this solution, the pigment was adsorbed to photoelectric conversion part 5.

Next, HIMILAN 1855 available from Du Pont cut out to have a width of 0.5 mm as a wall member that is to serve as sealing part 4 was disposed to surround photoelectric conversion part 5, and two substrates were pasted together so that photoelectric conversion layer 5 and counter electrode 6 were opposed to each other. The pasted object was pressure-bonded by heating in an oven at about 100°C for 10 minutes. In this way, a solar battery cell was formed and electrolyte disposition region 11 was formed. Electrolyte disposition region 11 contains photoelectric conversion part 5 inside the same, and is a region of a size larger than photoelectric conversion part 5. Therefore, electrolyte disposition region 11 has an elongated substantially rectangular shape, and can conceive long axis 81 and short axis 82 in Fig. 2.

Next, as an electrolyte, an electrolyte solution dissolving 0.6 mol/L of DMPII (product of SHIKOKU CHEMICALS CORPORATION), 0.1 mol/L of LiI (product of Aldrich), 0.5 mol/L of TBP (product of Aldrich), and 0.05 mol/L of I₂ (product of Kishida Chemical Co., Ltd.) in acetonitrile as a solvent was prepared.

Through first openings 8a and 8b and second opening 9, the internal pressure of the solar battery cell was reduced. After confirming that the internal pressure of the solar battery cell reached 10 Pa, the electrolyte solution was injected through first openings 8a and 8b and second opening 9. Thereafter, by a known technique, first openings 8a and 8b and second opening 9 were sealed by opening sealing material 10. In this manner, electrolyte part 7 was formed. In this manner, a solar cell was obtained.

During operation for fabricating the solar cell, the time required for achieving a vacuum in reducing the pressure prior to injection of the electrolyte solution (hereinafter, referred to as a "time to vacuum"), and the time required for injecting the electrolyte solution to fill the solar battery cell (hereinafter, referred to as an "injection time") were examined. A plurality of solar cells fabricated with different values of N are called Examples 1 to 5. Conditions in Examples 1 to 5 are N = 5, 2, 3, 7 and 8, respectively. For measurement of time to vacuum, the time required for a Pirani gauge connected with the solar battery cell to indicate 10 Pa was taken as a measured value.

For each solar cell obtained in Examples 1 to 5, photoelectric conversion efficiency under the irradiation with pseudo sunlight of AM (Air Mass) 1.5, and an irradiation intensity of 100 mW/cm² was examined.

Measurement results of time to vacuum, injection time and photoelectric conversion efficiency in Examples 1 to 5 are shown in Table 1.

**[Table 1]**

| | N (opening/m) | Time to vacuum (min.) | Injection time (sec.) | Photoelectric conversion efficiency |
|---|---|---|---|---|
| Example 1 | 5 | 6.3 | 21 | 7.88 |
| Example 2 | 2 | 48.8 | 182 | 7.95 |
| Example 3 | 3 | 20.0 | 73 | 8.05 |
| Example 4 | 7 | 3.0 | 9 | 7.82 |
| Example 5 | 8 | 2.3 | 6 | 7.85 |

### (Comparative Examples 1 and 2)

A solar cell was fabricated in a similar manner except that the value of N shown in Examples 1 to 5 was 0. Also the solar cell fabricated in this example is a pigment-sensitized solar cell. The production method is similar to that described for Examples 1 to 5.

N = 0 means that there is only a first opening in an end part, and there is no second opening in a middle part. This case is classified into the case where the first opening is arranged in only one end part in the direction of the long axis of the electrolyte disposition region and the case where the first opening is arranged in both end parts. The former case is regarded as Comparative Example 1, and the latter case is regarded as Comparative Example 2. In Comparative Example 2, when pressure reduction and injection of an electrolyte solution are conducted through first openings arranged in both end parts, the time to vacuum is 213.0 minutes and the injection time is 820.9 seconds.

By comparing Comparative Example 2 with Examples 1 to 5, it can be seen that both the time to vacuum and the injection time are shorter in Examples 1 to 5. As to Comparative Example 1, it is apparent that the time to vacuum and the injection time are increased in comparison with Comparative Example 2, and hence description is omitted here.

The time to vacuum could be reduced more in Examples 1 to 5 than in Comparative Example 2 because the air existing in the middle part of the internal space of the solar battery cell could be drawn out by a shorter distance and the internal pressure of the solar battery cell could be reduced more efficiently by reducing the pressure also through the second opening additionally provided in the middle part, than by reducing the pressure only through the first opening provided in the end part.

The injection time could be reduced more in Examples 1 to 5 than in Comparative Example 2 because the electrolyte solution can reach the middle part of the internal space of the solar battery cell more efficiently by injecting the electrolyte solution also through the second opening additionally provided in the middle part, than by injecting the electrolyte solution only through the first opening provided in the end part.

### (Examples 6 to 12)

Solar cells 52 of Examples 6 to 12 were fabricated with N = 4 in a similar manner to Example 1. Solar cell 52 is a pigment-sensitized solar cell. Since the longitudinal dimension of the electrolyte disposition region is about 1 m, the second opening is arranged at three positions at intervals of about 25 cm as shown in Fig. 14. These openings at three positions are sequentially called second openings 9a, 9b and 9c distinctively.

Second openings 9a, 9b and 9c were compared distinctively for the application for use to reduce the internal pressure of the solar battery cell and for the application for use to inject the electrolyte solution. Application of each second opening is shown in Table 2. The notation "pressure reduction hole + injection hole" means that the opening is used both for pressure reduction and for injection. Other steps are same as those in Example 1.

In this manner, Examples 6 to 12 were set up and for each fabricated solar cell 52, time to vacuum and injection time were measured. Also, photoelectric conversion efficiency was measured in the same measurement condition as in Example 1. The result is shown in Table 2.

**[Table 2]**

| | Opening 9a | Opening 9b | Opening 9c | Time to vacuum (min.) | Electrolyte solution injection time (sec.) | Photoelectric conversion efficiency |
|---|---|---|---|---|---|---|
| Example 6 | Injection hole | Pressure reduction hole | Injection hole | 78.5 | 195 | 7.98 |
| Example 7 | Injection hole | Pressure reduction hole | Pressure reduction hole | 54.6 | 961 | 7.88 |
| Example 8 | Injection hole | Injection hole | Pressure reduction hole | 79.3 | 186 | 7.92 |
| Example 9 | Pressure reduction hole | Injection hole | Pressure reduction hole | 53.8 | 943 | 7.79 |
| Example 10 | Pressure reduction hole + Injection hole | Pressure reduction hole + Injection hole | Pressure reduction hole + Injection hole | 48.8 | 170 | 7.84 |
| Example 11 | Pressure reduction hole + Injection hole | Injection hole | Pressure reduction hole + Injection hole | 55.2 | 165 | 7.93 |
| Example 12 | Pressure reduction hole + Injection hole | Pressure reduction hole | Pressure reduction hole + Injection hole | 46.9 | 798 | 7.87 |

### (Example 13)

A solar cell module having such a structure that a total of five solar battery cells each corresponding to the solar cell fabricated in the manner of Example 1 by selecting N = 4 are connected in series so that the front side and the back side are alternated as shown in Fig. 5 and integrated was fabricated. This is called Example 13. This solar cell module is a pigment-sensitized solar cell module. This production method will be described below.

As a support formed with a conductive layer, two glass substrates having a SnO₂ film of 70 mm long × 70 mm wide × 4 mm thick were prepared. As these substrates, those available from Nippon Sheet Glass Co., Ltd. were used. These two substrates are called "substrate X" and "substrate Y" in the following.

On the surface of substrate Y, platinum as a catalyst layer also serving as a counter electrode was formed in a film thickness of about 7 nm by a sputtering method.

Next, on each of a transparent conductive layer (SnO₂ film) as transparent conductive film 3 of substrate X, and a conductive layer (SnO₂ film) which is to serve as counter electrode 6 of substrate Y, a titanium oxide paste (product of Solaronix, trade name D/SP) was applied in such a shape that the shape after burning was 8 mm wide × 55 mm long × 20 µm thick using a screen printing machine (LS-150 available from NEWLONG SEIMITSU KOGYO) and leveled at room temperature for 1 hour, and dried in an oven at 80°C for 30 minutes, and burned in air at 500°C for 1 hour, to form a porous photoelectric conversion layer as photoelectric conversion part 5.

Next, scribing at a width of about 350 µm was conducted by irradiating each conductive layer with a laser beam (YAG laser, fundamental wavelength 1.06 µm) to evaporate the SnO₂ film.

Subsequently, in an adsorbing pigment solution prepared by dissolving a ruthenium pigment (product of Solaronix, trade name Ruthenium 620-1H3TBA) represented by the above chemical formula (3) at a concentration of 4 × 10⁻⁴ mol/L in a mixed solvent of acetonitrile and t-butanol mixed in a volume ratio of 1 : 1, substrates X and Y were dipped, and the pigment was adsorbed to respective photoelectric conversion parts 5.

In substrate Y, a process of punching openings corresponding to the first and second openings was conducted in a condition similar to that in Example 1.

In substrates X and Y obtained through the steps as described above, a silicone resin was applied in a width of 0.35 mm to porous photoelectric conversion parts 5 neighboring respective catalyst layers by screen printing, and pasted together, and substrates X and Y were adhered to each other by heating in an oven at about 100°C for 30 minutes.

Thereafter, the internal pressure in the space of each solar battery cell was reduced through the opening punched in substrate Y, and the electrolyte solution was injected into the solar battery cell, and the opening was sealed with an epoxy resin, to fabricate a pigment-sensitized solar cell module. As the electrolyte solution, the one dissolving 0.6 mol/L of 1, 2-dimethyl 3-propylimidazole iodide, 0.1 mol/L of lithium iodide, 0.5 mol/L of tertiary-butyl pyridine, and 0.05 mol/L of iodine in acetonitrile as a solvent was used.

For the fabricated pigment-sensitized solar cell module, time to vacuum and injection time were examined, and the time to vacuum was 2.0 minutes, and the injection time was 4.2 seconds. Further, photoelectric conversion efficiency examined under the irradiation with pseudo sunlight of AM 1.5, and an irradiation intensity of 100 mW/cm² was 8.25.

As a comparative example, a solar cell module having no second opening was fabricated according to the condition of Example 13. In this comparative example, the first opening was arranged only at one position in one end part of the electrolyte disposition region, and both pressure reduction and electrolyte solution injection were conducted through the first opening.

By comparing this comparative example with Example 13, it was found that both the time to vacuum and the injection time are shorter in Example 13.

Considering the measurement results in the above examples, it can be seen that as to the arrangement density of second openings, the cases where N is not less than 3 are significantly better over the cases where N is not more than 2. According to Table 1, in any cases of N = 3, 5, 7 and 8, the time to vacuum and the injection time can be reduced, and it can been seen that the photoelectric conversion efficiency is satisfactorily good. However, when the number of second openings is too large, the operation of punching the openings and the operation of sealing the openings are increased, and the efficiency is impaired. The upper limit considering the increase in operation steps is N = 7. Therefore, in the case where the electrolyte part contains an electrolyte solution containing a redox species and a solvent capable of dissolving the redox species in the solar cell according to the present invention, the arrangement density of at least one second opening along the long axis is preferably not less than 3 and not more than 7 per 1 m.

### (Molten salt electrolyte solution)

Although the fact that the electrolyte constituting the electrolyte part may be either a liquid electrolyte or a solid electrolyte has been described, it may be a molten salt electrolyte solution. When the electrolyte is a molten salt electrolyte solution, the electrolyte part can be called a molten salt electrolyte solution part. The electrolyte disposition region can be called a molten salt electrolyte solution region.

The molten salt electrolyte solution part is a part filled with the molten salt electrolyte solution between the porous photoelectric conversion layer and the catalyst layer. The molten salt electrolyte solution contains an electrolyte solution formed of a conductive material capable of transporting an electric charge, and those in a liquid state or a solid state at the time of completion of the solar cell may be used. As a molten salt electrolyte solution in a liquid state, those in a liquid state containing a redox species may be used. Concretely, those composed of a redox species and a molten salt capable of dissolving the same, and those composed of a redox species and a molten salt and a solvent capable of dissolving the same can be conceived, and those generally used in a battery, a solar cell or the like may be used without particular limitation. Also the one that is a solid before dissolving a redox species but will turn to a liquid state by dissolving a redox species may be used as a molten salt electrolyte solution. As a molten salt electrolyte solution in a solid state, a conductive material capable of transporting an electric charge, that is usable as an electrolyte of a solar cell and not having fluidity may be used. As a molten salt electrolyte solution in a solid state, for example, a polymer electrolyte obtained by solidifying a liquid electrolyte by a polymer compound, and the one obtained by solidifying a liquid electrolyte by microparticles are recited.

As a material which is an origin of a redox species in the molten salt electrolyte solution,
● combinations of a metal iodide such as LiI, NaI, KI, CsI or CaI₂ and I₂;
● combinations of an iodide of a quaternary ammonium salt such as tetraalkyl ammonium iodide, pyridinium iodide or imidazolium iodide and I₂;
● combinations of a metal bromide such as LiBr, NaBr, KBr, CsBr or CaBr₂ and Br₂; and
● combinations of bromide of a quaternary ammonium salt such as tetraalkyl ammonium bromide or pyridinium bromide and Br₂ can be recited. The material which is an origin of the redox species may be used in a mixture of two or more kinds. Among these, a combination of LiI and I₂, or a combination of imidazolium iodide and I₂, or a combination of LiI and imidazolium iodide and I₂ is preferred.

The "molten salt" used in the present invention is a salt in a liquid state composed only of ions without containing a solvent. The molten salt may be those generally usable in a solar cell or the like, and is not particularly limited, however, it is preferably a salt having a melting point of lower than room temperature (25°C) or a salt that has a liquid state at room temperature by dissolving another molten salt or an electrolyte salt other than a molten salt even if it has a melting point higher than room temperature. As examples of structure of molten salts, the following can be recited.

As a cation of a molten salt, ammonium, imidazolium, oxazolium, thiazolium, pyrazolium, isoxazolium, thiadiazolium, oxadiazolium, triazolium, pyrrolidinium, pyridinium, pyrimidinium, pyridazinium, pyrazinium, triadinium, phosphonium, sulfonium, carbazolium, indolium and derivatives thereof are preferred, and ammonium, imidazolium, pyridinium and sulfonium are particularly preferred.

As an anion, metal chlorides such as AlCl₄⁻ and Al₂Cl₇⁻, fluorine-containing substances such as PF₆⁻, BF₄⁻, CF₃SO₃⁻, N(CF₃SO₂)₂⁻ and N(SO₂F)₂⁻F(HF)n⁻, non-fluorine-containing substances such as NO₃⁻, CH₃COO⁻, C₆H₁₁COO⁻, N(CN)₂⁻ and B(CN)₄⁻, and halides of iodine, bromine and the like are preferred.

A molten salt may be synthesized by a known method. Taking a quaternary ammonium salt as an example, a method including, as a first step, quaternizing an amine by using an alkyl halide as an alkylation agent on a tertiary amine, and as a second step, conducting ion exchange from a halide anion to an objective anion can be used. As another method, for example, a method of obtaining an intended compound in a single step, for example, by letting a tertiary amine react with an acid having an intended anion is known.

The condition for a solvent used in a molten salt electrolyte solution is identical to that described for a solvent in the first embodiment.

Also, the condition for an additive used in a molten salt electrolyte solution is identical to that described for an additive in the first embodiment.

In the solar cell module according to the present invention, in particular, the pigment-sensitized solar cell module, when the catalyst layer is situated on the side of the light receiving plane, incident light reaches the porous photoelectric conversion layer on which the pigment is adsorbed through the electrolyte solution, and a carrier is excited. For this reason, performance can be deteriorated depending on the electrolyte concentration used in the second photoelectric conversion layer where the catalyst layer is on the side of the light receiving plane.

In the following, concrete examples using a molten salt electrolyte solution as an electrolyte will be described.

### (Examples 21 to 27)

As a solar cell according to the present invention, a pigment-sensitized solar cell using a molten salt electrolyte solution was fabricated. The production method will be concretely shown below. This pigment-sensitized solar cell has a structure shown in Fig. 1 and Fig. 2. However, the number of second openings 9 is not limited to that shown in Fig. 1 and Fig. 2. Here, for the purpose of comparison, plural kinds of solar cells were fabricated while the arrangement density of second openings 9, namely the value of N was varied. The definition for N is as described in the description part in Examples 1 to 5. Substrates of examples were individually fabricated so that N = 2, 3, 5, 7, 8, 11 and 17, respectively.

The production method is identical to that in Examples 1 to 5 except for the kind of the electrolyte. As the electrolyte, the one dissolving 0.12 mol/L of Gu-SCN, 0.5 mol/L of NMBIm, and 0.2 mol/L of I₂ (product of Kishida Chemical Co., Ltd.) in a mixture of EMI-TFSI and MPII which are molten salts mixed in a volume ratio of 13 : 7 as a solvent was prepared. The electrolyte prepared in this manner corresponds to the molten salt electrolyte solution.

Conditions in Examples 21 to 27 are N = 5, 2, 3, 7, 8, 11 and 17, respectively. Measurement results of time to vacuum, injection time and photoelectric conversion efficiency in Examples 21 to 27 are shown in Table 3.

**[Table 3]**

| | N (opening/m) | Time to vacuum (min.) | Injection time (sec.) | Photoelectric conversion efficiency |
|---|---|---|---|---|
| Example 21 | 5 | 6.3 | 95 | 3.81 |
| Example 22 | 2 | 48.8 | 230 | 3.98 |
| Example 23 | 3 | 20.0 | 150 | 4.06 |
| Example 24 | 7 | 3.0 | 67 | 3.85 |
| Example 25 | 8 | 2.3 | 56 | 3.82 |
| Example 26 | 11 | 1.3 | 40 | 3.78 |
| Example 27 | 17 | 0.5 | 9 | 3.82 |

### (Comparative Examples 21 and 22)

A solar cell was fabricated in a similar manner except that the value of N shown in Examples 21 to 27 was 0. Also the solar cell fabricated in this example is a pigment-sensitized solar cell. The electrolyte in these solar cells is a molten salt electrolyte solution. The production method is similar to that in Examples 21 to 27.

N = 0 means that there is only a first opening in an end part, and there is no second opening in a middle part. This case is classified into the case where the first opening is arranged in only one end part in the direction of the long axis of the electrolyte disposition region and the case where the first opening is arranged in both end parts. The former case is regarded as Comparative Example 21, and the latter case is regarded as Comparative Example 22. In Comparative Example 22, when pressure reduction and injection of a molten salt electrolyte solution are conducted through first openings arranged in both end parts, the time to vacuum is 213.0 minutes and the injection time is 980.5 seconds.

By comparing Comparative Example 22 with Examples 21 to 27, it can be seen that both the time to vacuum and the injection time are shorter in Examples 21 to 27. As to Comparative Example 21, it is apparent that the time to vacuum and the injection time are increased in comparison with Comparative Example 22, and hence description is omitted here.

The time to vacuum could be reduced more in Examples 21 to 27 than in Comparative Example 22 because the air existing in the middle part of the internal space of the solar battery cell could be drawn out by a shorter distance and the internal pressure of the solar battery cell could be reduced more efficiently by reducing the pressure also through the second opening additionally provided in the middle part, than by reducing the pressure only through the first opening provided in the end part.

The injection time could be reduced more in Examples 21 to 27 than in Comparative Example 22 because the molten salt electrolyte solution can reach the middle part of the internal space of the solar battery cell more efficiently by injecting the molten salt electrolyte solution also through the second opening additionally provided in the middle part, than by injecting the molten salt electrolyte solution only through the first opening provided in the end part.

### (Examples 28 to 34)

A cell was fabricated according to Example 21, and solar cell 52 of Examples 28 to 34 was fabricated with N = 4. Solar cell 52 is a pigment-sensitized solar cell. Since the longitudinal dimension of the electrolyte disposition region is about 1 m, the second opening is arranged at three positions as shown in Fig. 14. Similarly to Examples 6 to 12, these openings at three positions are sequentially called second openings 9a, 9b and 9c distinctively.

Similarly to Examples 6 to 12, second openings 9a, 9b and 9c were compared distinctively for the application for use to reduce the internal pressure of the solar battery cell and for the application for use to inject the electrolyte solution. Application of each of first and second openings is shown in Table 4.

In this manner, Examples 28 to 34 were set up and for each fabricated solar cell 52, time to vacuum and injection time were measured. Also, photoelectric conversion efficiency was measured in the same measurement condition as in Example 21. The result is shown in Table 4.

**[Table 4]**

| | Opening 8a | Opening 9a | Opening 9b | Opening 9c | Opening 8b | Time to vacuum (min.) | Molten salt electrolyte solution injection time (sec.) | Photoelectric conversion efficiency |
|---|---|---|---|---|---|---|---|---|
| Example 28 | Pressure reduction hole | Injection hole | Pressure reduction hole | Injection hole | Pressure reduction hole | 12.5 | 210 | 3.92 |
| Example 29 | Injection hole | Pressure reduction hole | Injection hole | Pressure reduction hole | Injection hole | 23.7 | 130 | 3.85 |
| Example 30 | Pressure reduction hole | Injection hole | Injection hole | Pressure reduction hole | Injection hole | 22.3 | 127 | 3.94 |
| Example 31 | Pressure reduction hole | Pressure reduction hole | Injection hole | Pressure reduction hole | Injection hole | 13.8 | 225 | 3.77 |
| Example 32 | Pressure reduction hole + Injection hole | Pressure reduction hole + Injection hole | Pressure reduction hole + Injection hole | Pressure reduction hole + Injection hole | Pressure reduction hole + Injection hole | 5.8 | 102 | 3.85 |
| Example 33 | Pressure reduction hole + Injection hole | Pressure reduction hole + Injection hole | Injection hole | Pressure reduction hole + Injection hole | Pressure reduction hole + Injection hole | 6.3 | 120 | 3.95 |
| Example 34 | Pressure reduction hole | Pressure reduction hole + Injection hole | Pressure reduction hole | Pressure reduction hole + Injection hole | Pressure reduction hole | 5.5 | 206 | 3.84 |

### (Example 35)

The one corresponding to Example 15 was fabricated by using the above-described molten salt electrolyte solution as an electrolyte. This is called Example 35. For the pigment-sensitized solar cell module of Example 35, time to vacuum and injection time were examined. As a result, the time to vacuum was 2.0 minutes and the injection time was 90.1 seconds. Further, photoelectric conversion efficiency examined under the irradiation with pseudo sunlight of AM 1.5, and an irradiation intensity of 100 mW/cm² was 4.25.

### (Comparative example of module)

As a comparative example, a solar cell module having no second opening was fabricated according to the condition of Example 35. In this comparative example, the first opening was arranged only at one position in one end part of the electrolyte solution disposition region, and both pressure reduction and molten salt electrolyte solution injection were conducted through the first opening.

By comparing this comparative example with Example 35, it was found that both the time to vacuum and the injection time are shorter in Example 35.

### (Preferred condition of second opening when molten salt electrolyte solution is used as electrolyte)

Considering the measurement results in the above Examples 21 to 35, it can be seen that as to the arrangement density of second openings, the cases where N is not less than 6 are significantly better over the cases where N is not more than 2. According to Table 3, in any cases of N = 3, 5, 7, 8, 11 and 17, the time to vacuum and the injection time can be reduced, and it can been seen that the photoelectric conversion efficiency is satisfactorily good. However, when the number of second openings is too large, the operation of punching the openings and the operation of sealing the openings are increased, and the efficiency is impaired. The upper limit considering the increase in operation steps is N = 17. Therefore, in the case where the electrolyte part contains a molten salt electrolyte solution containing a redox species and a solvent capable of dissolving the redox species in the solar cell according to the present invention, the arrangement density of at least one second opening along the long axis is preferably not less than 6 and not more than 17 per 1 m.

In both cases where the electrolyte part contains an electrolyte solution and it contains a molten salt electrolyte solution, it is preferred that the redox species contains either a combination of an iodide salt and I₂ or a combination of a bromide salt and Br₂. This is because by employing such a configuration, it is possible to operate the solar cell most efficiently. Concrete description for the material of the redox species is as already described in the first embodiment.

The embodiments disclosed herein are given for exemplification rather than for limitation in all respects. The scope of the present invention is indicated by claims rather than by the description as described above, and embraces any modification within the equivalent meaning and scope of claims.

### INDUSTRIAL APPLICABILITY

The present invention can be applied to a solar cell and a solar cell module.

### REFERENCE SIGNS LIST

1 light transmissive substrate, 2 supporting substrate, 3 transparent conductive film, 4 sealing part, 5 photoelectric conversion part, 6 counter electrode, 7 electrolyte part, 8 first opening, 9 second opening, 10 opening sealing material, 11 electrolyte disposition region, 12 light, 13 end part, 14 middle part, 51 solar cell, 81 long axis, 82 short axis, 101 first support, 102 second support, 103 conductive layer, 104 sealing material, 105 photoelectric conversion layer, 106 counter conductive layer, 107 electrolyte solution, 501, 502, 503 solar cell module

## Claims

1. A solar cell (51) comprising:
a light transmissive substrate (1),
a supporting substrate (2) disposed parallel with said light transmissive substrate,
a photoelectric conversion part (5) and a counter electrode (6) disposed between said light transmissive substrate and said supporting substrate in such a manner that they are spaced from each other,
an electrolyte part (7) disposed between said light transmissive substrate and said supporting substrate while being in contact with said photoelectric conversion part and said counter electrode, and
a sealing part (4) that surrounds and seals said electrolyte part in such a manner that said electrolyte part is retained within an electrolyte disposition region that is a region definable by a long axis (81) and a short axis (82) that is perpendicular to said long axis, wherein
in at least one end part in the direction of said long axis of said electrolyte disposition region, a first opening (8) that makes said electrolyte part communicate with the outside is provided,
in a middle part in the direction of said long axis of said electrolyte disposition region, at least one second opening (9) that makes said electrolyte part communicate with the outside is provided, and
said first and second openings are sealed.

2. The solar cell according to claim 1, wherein said second opening is provided in said supporting substrate.

3. The solar cell according to claim 1 or 2, wherein said electrolyte part contains an electrolyte solution containing a redox species and a solvent capable of dissolving said redox species, and arrangement density of said second opening along said long axis is not less than 3 and not more than 7 per 1 m long.

4. The solar cell according to claim 1 or 2, wherein said electrolyte part contains a molten salt electrolyte solution containing a redox species and a molten salt capable of dissolving said redox species, and arrangement density of said second opening along said long axis is not less than 6 and not more than 17 per 1 m long.

5. The solar cell according to claim 3 or 4, wherein said redox species contains either a combination of an iodide salt and I₂ or a combination of a bromide salt and Br₂.

6. A solar cell module including a configuration where a plurality of solar cells including the solar cell according to any one of claims 1 to 5 are connected.
